# EUROPEAN PATENT APPLICATION

(11) **EP 2 369 794 A1**
(43) Date of publication of application: **28.09.2011**
(21) Application number: 11155928.2
(22) Date of filing: 25.02.2011
(51) Int. Cl.: H04L 12/56, H04W 28/02, H04W 28/14, H04W 36/38

(54) **Wireless network control device, wireless network control method, and wireless network control system**

(30) Priority: 17.03.2010 JP 2010061450
(71) Applicant: FUJITSU LIMITED, Kawasaki-shi, Kanagawa 211-8588 (JP)
(72) Inventor: Higashi, Koichiro, Kawasaki-shi, Kanagawa 211-8588 (JP); Hatakeyama, Shinya, Kawasaki-shi, Kanagawa 211-8588 (JP); Sugisaki, Hideyuki, Kawasaki-shi, Kanagawa 211-8588 (JP); Ito, Mikio, Kawasaki-shi, Kanagawa 211-8588 (JP); Takashima, Ken, Kawasaki-shi, Kanagawa 211-8588 (JP); Iwasa, Masaru, Kawasaki-shi, Kanagawa 211-8588 (JP)
(74) Representative: Stebbing, Timothy Charles

(57) **Abstract**

A technique to establish data transmission to a mobile terminal at a transmission rate balanced with the amount of data received from a source device in a short period of time after a handover. A buffer (101) has a predetermined storage capacity, and accumulates data received from an external device. A transmitting unit (102) reads data from the buffer (101) and transmits the data to the mobile terminal. A transmission rate determining unit (104) determines the transmission rate for transmitting data from the external device to its own device, based on the free space in the buffer (101). The window size notifying unit (105) notifies the mobile terminal of a window size in accordance with the determined transmission rate.

## Description

The embodiment discussed herein is directed to a wireless network control device, a wireless network control method, and a wireless network control system.

In recent years, a 3rd generation (3G) system (a third-generation mobile communication system) is used as a mobile communication system for performing calls and data communications through wireless communications. The maximum downlink transmission rate in such a 3G system is 14 Mbps. Here, the downlink transmission rate is the rate at which data is transmitted from a data transmission source such as a transmission source server to a mobile terminal.

On the other hand, as a novel mobile communication system in the field of wireless communications, Long Term Evolution (LTE) systems are being considered for commercial use. The maximum downlink data transmission rate in a LTE system is 100 Mbps. In a LTE system, data transmission can be performed at a higher transmission rate than that in a 3G system.

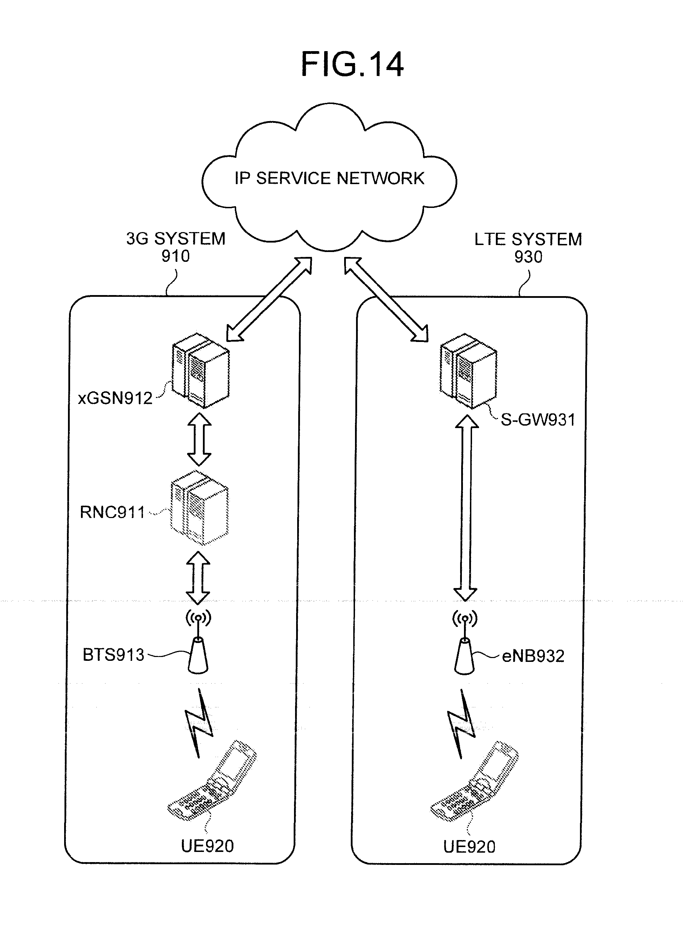

However, a certain period of time is required to replace all the current mobile communication systems with LTE systems. Therefore, during the transition period before the LTE systems become available nationwide, there will be situations where a LTE system 930 and a 3G system 910 coexist, as illustrated in FIG. 14. FIG. 14 is a schematic view of a coexisting mobile communication system. As illustrated in FIG. 14, in the 3G system 910, data transmitted from an IP service network is transferred to a Radio Network Controller (RNC) 911 via a serving/gateway General packet radio service Support Node (xGSN) 912. Further, the data is transferred from the RNC 911 to a User Equipment (UE) 920 as a mobile terminal via a Base Transceiver Station (BTS) 913. Here, the RNC 911 is a wireless network control device. Hereinafter, a mobile station will also be called a UE. In the LTE system 930, data transmitted from the IP service network is transferred to the UE 920 via a Serving-Gateway (S-GW) 931 and an evolution Node B (eNB) 932.

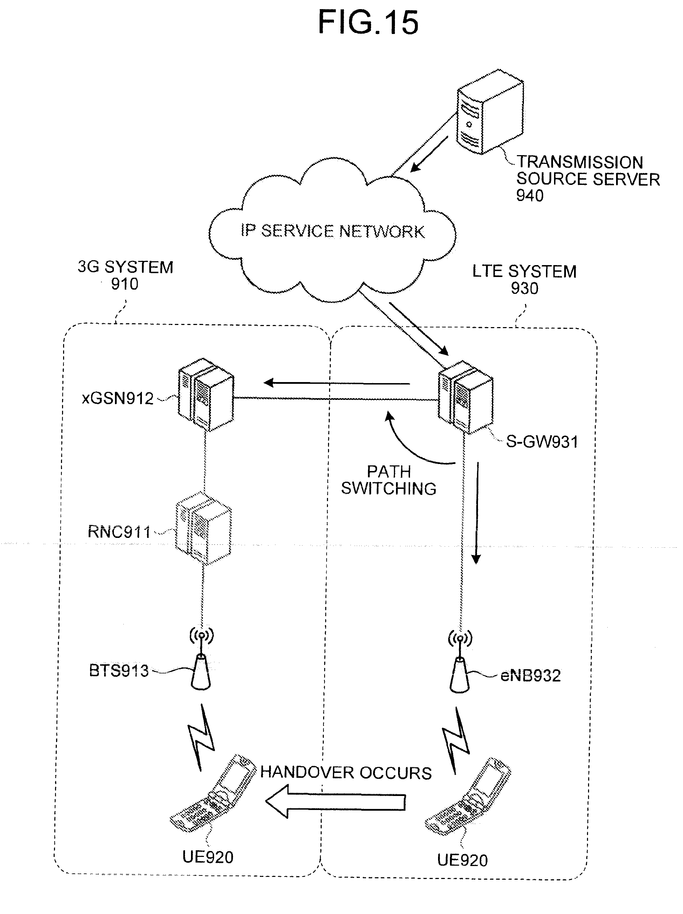

FIG. 15 is a schematic diagram for explaining a conventional handover from a LTE system to a 3G system. A transmission source server 940 in FIG. 15 is the transmission source of the data for the UE 920.

In each communication system illustrated in FIG. 15, the UE 920 determines a window size from the state of the network with the RNC 91 1 or the like. The UE 920 then notifies the transmission source server 940 of the determined window size. Receiving the notification of the window size from the UE 920, the transmission source server 940 transmits data to the RNC 911 at a transmission rate in accordance with the window size designated by the UE 920.

In the case where the LTE system 930 and the 3G system 910 coexist, the UE 920 moves from the range of the LTE system 930 into the range of the 3G system 910, as illustrated in FIG. 15. At this point, a handover from the LTE system 930 with a maximum transmission rate of 100 Mbps to the 3G system 910 with a maximum transmission rate of 14 Mbps occurs.

When a handover from the LTE system 930 to the 3G system 910 occurs, the S-GW 931 switches the paths for transmitting data between the transmission source server 940 and the UE 920. The packets (Forwarding Data) being transmitted from the eNB 932 to the UE 920 are then transferred to the RNC 911. Also, after a handover from the LTE 930 to the 3G system 910 occurs, the packets (Direct Data) from the transmission source server 940 are transmitted to the RNC 911. At this point, the transmission source server 940 cannot recognize a handover to a mobile communication system having a low transmission rate. Therefore, when a handover from the LTE system 930 to the 3G system 910 occurs, the RNC 911 might receive more packets than it is capable of handling.

The RNC 911 has a buffer for storing data. The RNC 911 temporarily accumulates data received from the transmission source server 940 into the buffer. The RNC 911 then transmits the data accumulated in the buffer to the UE 920. As the RNC 911 transmits data to the UE 920, the data accumulated in the buffer decreases. That is, the free space in the buffer increases and decreases, as data is received from the transmission source server 940, and is transmitted to the UE 920.

When the free space in its own buffer is large, the RNC 911 sets a low transmission rate for transmitting data to the UE 920. When the free space in its own buffer is small, the RNC 911 sets a high transmission rate for transmitting data to the UE 920. The RNC 911 determines such a transmission rate for transmission to the UE 920 that the amount of data accumulated in its own buffer does not become zero.

If the free space in its own buffer is large when a handover from the LTE system 930 to the 3G system 910 occurs, the RNC 911 lowers the transmission rate for transmission to the UE 920. Receiving data from the RNC 911 at a low transmission rate, the UE 920 determines that the load of the network is high, and transmits a window size in accordance with the low transmission rate to the transmission source server 940. Therefore, the RNC 911 receives data from the transmission source server 940 at a low transmission rate, though the free space in the buffer is large. On the other hand, if the free space in its own buffer is small when a handover from the LTE system 930 to the 3G system 910 occurs, the RNC 911 raises the transmission rate for transmission to the UE 920. Receiving data from the RNC 911 at a high transmission rate, the UE 920 determines that the load of the network is low, and transmits a window size in accordance with the high transmission rate to the transmission source server 940. Therefore, the RNC 911 receives data from the transmission source server 940 at a high transmission rate, though the free space in the buffer is small. As described above, by the conventional method, the transmission rate for data from the transmission source server 940 to the RNC 911 is at variance with the free space in the buffer of the RNC 911.

Particularly, if the free space in the buffer is small, the RNC 911 receives data transmitted from the transmission source server 940 at a high transmission rate. In addition, the RNC 911 sometimes receives forward packets from the eNB 932. As a result, a data overflow might occur in the RNC 911. Also, line congestion might be caused inside the RNC 911, or packets might go missing.

If a data overflow or line congestion is caused in the RNC 911 as described above, not only the throughput of the UE 920 causing the handover but also the throughputs of other UEs 920 become lower. Therefore, it is preferable to lower the transmission rate for transmission from the transmission source server 940 to the RNC 911 after each handover.

There has been a suggested technique for avoiding a delay in data transmission due to a handover by reducing the amount of information contained in each one set of data transmitted from the transmission source after a handover occurs. Also, there has been a suggested technique by which the throughput between a server and a client is measured, and the transmission rate for data transmission from the server is controlled based on the results of the measurement.
Patent Document 1: Japanese Laid-open Patent Publication No. 2004-153618
Patent Document 2: Japanese Laid-open Patent Publication No. 2009-89416

However, the conventional technique by which the amount of information contained in data is reduced does not involve a change in the transmission rate for actual packets. Therefore, by this conventional technique, the transmission rate for data actually transmitted from the transmission source after a handover remains higher than the communication capacity of the RNC, and it is difficult to restrain an overflow in the RNC.

Also, by using the conventional technique by which the throughput between the RNC and the UE is measured after a handover, and the transmission rate for data transmission from the transmission source is controlled based on the measurement results, it still takes time to carry out throughput measurement. During that time, the RNC might have an overflow.

Accordingly, it is desirable to provide a wireless network control device, a wireless network control method, and a wireless network control system that restrain transmission of data beyond the processing capacity of its own device, and shorten the delay in completion of data transmission due to data discarding or the like.

According to an aspect of an embodiment of the invention, a wireless network control device includes a buffer that has a predetermined storage capacity, and accumulates data received from an external device; a transmitting unit that reads data from the buffer and transmits the data to a mobile terminal; a transmission rate determining unit that determines a transmission rate for transmitting data from the external device to its own device, based on a free space in the buffer; and a window size notifying unit that notifies the mobile terminal of a window size in accordance with the transmission rate determined by the transmission rate determining unit.

Reference is made, by way of example only, to the accompanying drawings in which:
FIG. 1 is a block diagram of a wireless network control device according to a first embodiment;
FIG. 2 schematically shows the structure of a wireless network control system according to a second embodiment;
FIG. 3 is a block diagram of the wireless network control system according to the second embodiment;
FIG. 4 is a diagram illustrating an example of a STATUS PDU format;
FIG. 5 is a diagram illustrating the specifics of the data stored in SUFIs;
FIG. 6 is a flowchart of an operation to be performed by the RNC to send a transmission rate notification.
FIG. 7 is a flowchart of an operation to be performed by the UE to send a transmission rate notification;
FIG. 8 is a sequence diagram illustrating the operations to be performed by the respective components when a handover occurs;
FIG. 9 is a sequence diagram for explaining a change in the transmission rate for transmitting data from the RNC to the UE;
FIG. 10 is a sequence diagram for explaining a change in the transmission rate in a case where the transmission rate is lowered upon occurrence of a handover, without a change in the transmission rate in accordance with the free space in the buffer;

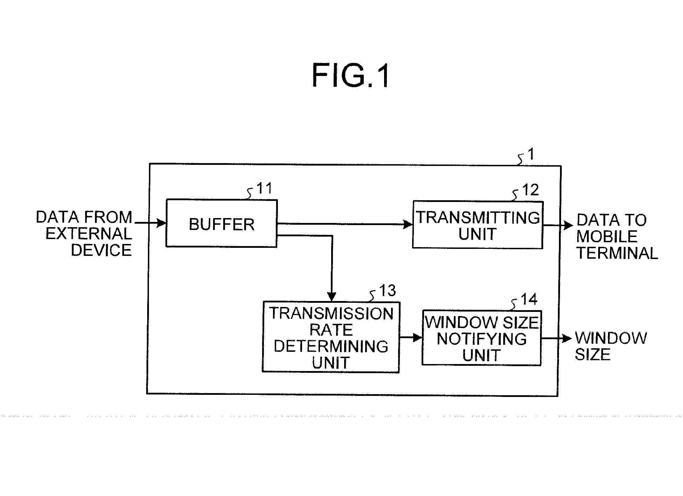

FIG. 1 are graphs for comparing changes in the throughput between the transmission source server and the UE in the second embodiment with those in a conventional case;

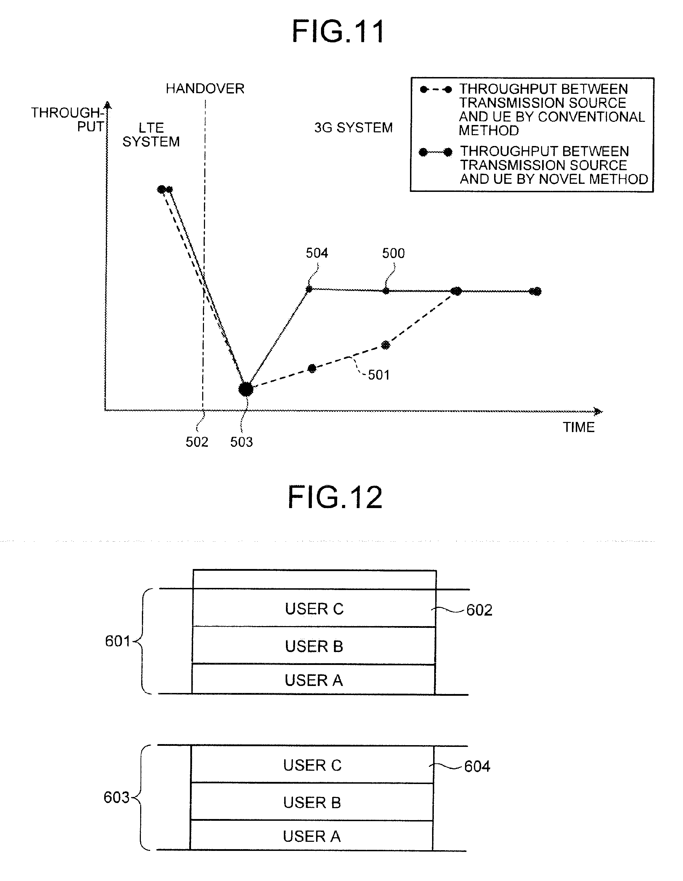

FIG. 12 is a diagram for explaining the difference in the packet amount with respect to the communication band due to occurrence f a handover between the second embodiment and the conventional case;

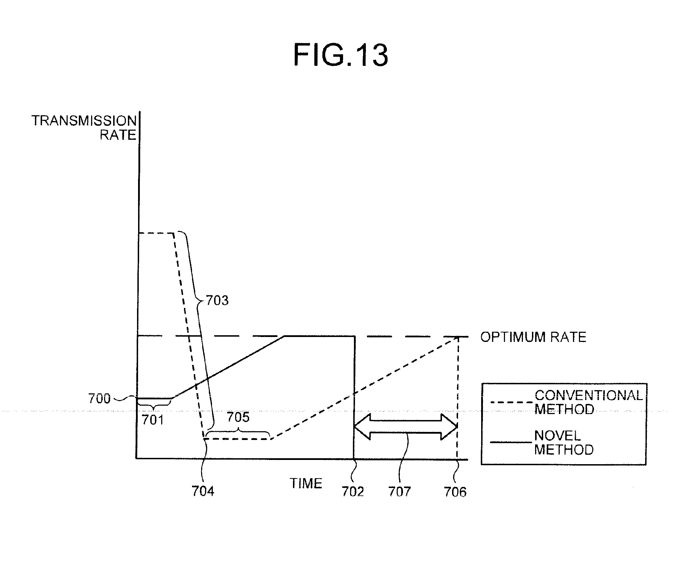

FIG. 13 are graphs for comparing a case where the transmission rate is lowered upon occurrence of a handover with a case where the transmission rate is lowered after a congested state occurs;
FIG. 14 is a schematic view of a coexisting mobile communication system; and
FIG. 15 is a schematic diagram for explaining a conventional handover from a LTE system to a 3G system.

Preferred embodiments of the present invention will be explained with reference to accompanying drawings. It should be noted that those embodiments do not limit the wireless network control device, the wireless network control method, and the wireless network control system of the present invention.

### [a] First Embodiment

FIG. 1 is a block diagram of a wireless network control device 1 according to a first embodiment. The wireless network control device 1 includes a buffer 11, a transmitting unit 12, a transmission rate determining unit 13, and a window size notifying unit 14.

The buffer 11 is a storage device such as a memory. The buffer 11 has a predetermined capacity as the storage capacity for storing data. The buffer 11 stores data that is received from an external device and is to be transmitted to a mobile terminal. The buffer 11 accumulates the stored data. The data accumulated in the buffer 11 decreases as the later described transmitting unit 12 reads the data.

The transmitting unit 12 reads the data accumulated in the buffer 11, and transmits the data to an external mobile terminal.

The transmission rate determining unit 13 acquires the free space in the buffer 11, from the buffer 1 l. Using the free space in the buffer 11, the transmission rate determining unit 13 determines the rate at which data is to be transmitted from an external device to its own device. Hereinafter, the rate determined by the transmission rate determining unit 13 to transmit data from an external device to its own device will also be referred to as the "source transmission rate". The transmission rate determining unit 13 outputs the source transmission rate to the window size notifying unit 14.

`The window size notifying unit 14 receives an input of the source transmission rate from the transmission rate determining unit 13. The window size notifying unit 14 determines the window size in accordance with the source transmission rate. The window size notifying unit 14 then notifies the mobile terminal of the information about the window size in accordance with the source transmission rate.

As described above, the wireless network control device according to the first embodiment determines the transmission rate in accordance with the buffer free space as the rate at which data is transmitted from an external device. The wireless network control device then notifies a mobile terminal of the window size in accordance with the determined transmission rate. Receiving the notification of the window size from the mobile terminal, the external device can transmit data to the wireless network control device at the transmission rate determined by the wireless network control device. Accordingly, data transmission beyond the processing capacity of the wireless network control device can be restrained, and the delay in data transmission completion due to data discarding or resending can be shortened.

Since the rate at which transmission from an external device is performed is determined in accordance with the buffer free space, data can be accumulated in a short period of time, and the buffer free space can be made small in a short period of time. Accordingly, the wireless network control device according to the first embodiment can establish data transmission to a mobile terminal at a transmission rate balanced with the amount of data received from a source device in a short period of time after a handover. In this manner, decreases in the throughput between the data transmission source and the mobile terminal can be reduced.

### [b] Second Embodiment

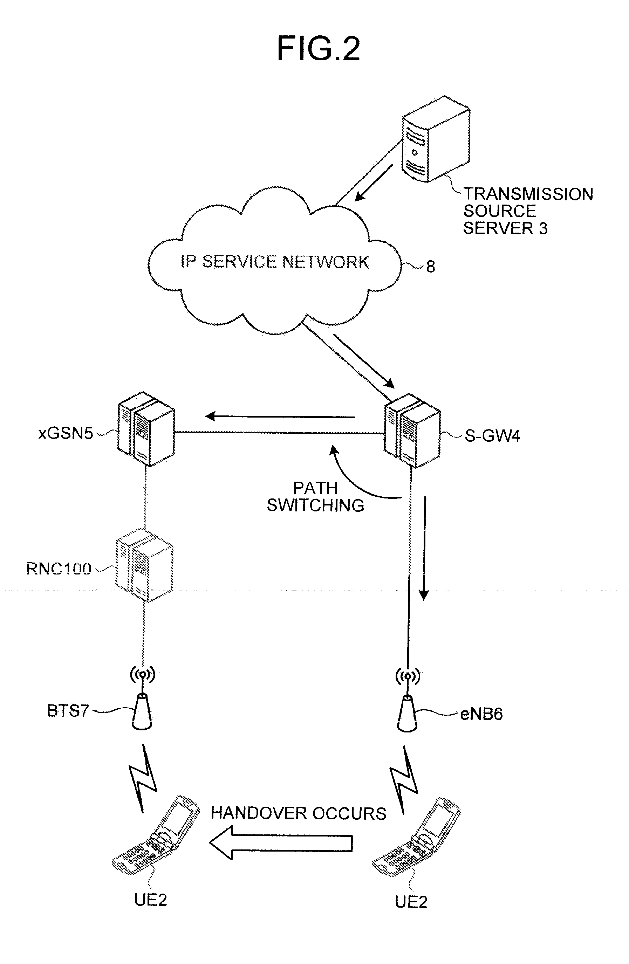

FIG. 2 is a schematic view of the structure of a wireless network control system according to a second embodiment. First, referring to FIG. 2, the system structure and operation of the wireless network control system according to the second embodiment are briefly described.

As illustrated in FIG. 2, a RNC 100, a UE 2, a transmission source server 3, a S-GW 4, a xGSN 5, an eNB 6, and a BTS 7 are provided in the wireless network control system according to the second embodiment. The transmission source server 3 and the S-GW 4 are connected to each other via an IP server network 8. The S-GW 4 and the eNB 6 form a LTE system, and the RNC 100, the xGSN 5, and the BTS 7 form a 3G system. Here, in the LTE system, the maximum value of the downlink transmission rate is I 00 Mbps. In the 3G system, the maximum value of the downlink transmission rate is 14 Mbps. The LTE system is an example of the first communication system. The 3G system is an example of the second communication system.

First, the data flow seen in a case where the UE 2 exists in the communication region of the LTE system is described. The following is a description of a case where the UE 2 exists in the communication region of the LTE system from the beginning, or a case where a handover from the 3G system to the LTE system has not occurred.

The transmission source server 3 receives a window size notification from the UE 2. Here, the UE 2 designates the window size, with the maximum transmission rate being 100 Mbps. The transmission source server 3 transmits data to the S-GW 4 at a transmission rate in accordance with the window size designated by the UE 2. Specifically, the transmission source server 3 changes the transmission rate by setting the window size for transmitting data to the RNC 100, at the window size designated by the UE 2. At this point, the transmission rate for transmission from the transmission source server 3 has a maximum value of 100 Mbps. The S-GW 4 then receives the data transmitted from the transmission source server 3 via the IP service network 8. The S-GW 4 then transmits the data received from the transmission source server 3 to the UE 2 via the eNB 6. The UE 2 receives the data output by the transmission source server 3, from the eNB 6.

Next, the data flow seen in a case where the UE 2 exists in the communication region of the 3G system is described. The following is a description of a case where the UE 2 exists in the communication region of the LTE system from the beginning, or a case where a handover from the LTE system to the 3G system has not occurred.

The transmission source server 3 receives a window size notification from the UE 2. Here, the UE 2 designates the window size, with the maximum transmission rate being 14 Mbps. The transmission source server 3 transmits data to the S-GW 4 at a transmission rate in accordance with the window size designated by the UE 2. At this point, the transmission rate for transmission from the transmission source server 3 has a maximum value of 14 Mbps. The S-GW 4 then receives the data transmitted from the transmission source server 3 via the IP service network 8. The S-GW 4 then transmits the data received from the transmission source server 3 to the xGSN 5. The xGSN 5 then transmits the data received from the S-GW 4 to the RNC 100. The RNC 100 transmits the data received from the xGSN 5, to the UE 2 via the BTS 7. The RNC 100 then transmits the data to the UE 2 at a self-determined transmission rate. The UE 2 receives the data output by the transmission source server 3, from the BTS 7.

Next, a case where the UE 2 moves from the communication region of the LTE system to the communication region of the 3G system, and a handover from the LTE system to the 3G system occurs is described. In this case, the S-GW 4 switches from the path for transmitting data to the eNB 6, to the path for transmitting data to the xGSN 5. Here, there are the following three kinds of data: the data the eNB 6 transmits to the UE 2 when the handover occurs; the data the transmission source server 3 transmitted to the UE 2 before the handover occurs; and the data to be transmitted from the transmission source server 3 after the handover occurs. Since the operation of the network control system varies among the three kinds of data, the operation of the network control system is described for each of the three kinds of data is described in the following.

First, the data the eNB 6 transmits to the UE 2 when the handover occurs is described. The S-GW 4 transmits the data the eNB 6 transmits to the UE 2 at the time of the handover, to the xGSN 5. Here, the transmission rate of the transmission source server 3 for the data the eNB 6 transmits to the UE 2 at the time of the handover is the rate employed when the UE 2 existed in the communication region of the LTE system. Therefore, there is a probability that the transmission rate in this case exceeds the communication capacity of the RNC 100. The xGSN 5 then transmits the data received from the S-GW 4 to the RNC 100. The RNC 100 then transmits the data received from the xGSN 5, to the UE 2 via the BTS 7. The UE 2 receives the data output by the transmission source server 3, from the BTS 7.

Next, the data the transmission source server 3 transmitted to the UE 2 before the occurrence of the handover is described. If there is data the transmission source server 3 transmitted to the UE 2 before the occurrence of the handover, the S-GW 4 receives the data from the transmission source server 3 via the IP service network 8. The transmission rate at which the transmission source server 3 transmitted the data before the occurrence of the handover is the rate employed when the UE 2 existed in the communication region of the LTE system. Therefore, there is a probability that the transmission rate in this case exceeds the communication capacity of the RNC 100. The S-GW 4 then transmits the data the transmission source server 3 transmitted to the UE 2 before the occurrence of the handover, to the xGSN 5. The xGSN 5 then transmits the data received from the S-GW 4 to the RNC 100. The RNC 100 then transmits the data received from the xGSN 5, to the UE 2 via the BTS 7. The UE 2 receives the data output by the transmission source server 3, from the BTS 7.

Lastly, the data transmitted from the transmission source server 3 after the occurrence of the handover is described. After the occurrence of the handover, the RNC 100 receives a notification of the occurrence of the handover from the S-GW 4 via the xGSN 5. The RNC 100 then determines the transmission rate in accordance with the free space in its own buffer, and notifies the window size in accordance with the determined transmission rate to the UE 2. The determination of the communication rate will be described later in detail. The UE 2 then notifies the window size designated by the RNC 100 to the transmission source server 3. The transmission source server 3 determines the transmission rate in accordance with the window size designated by the UE 2, and transmits the data to the S-GW 4 at the determined transmission rate. This transmission rate is determined by the RNC 100, and therefore, does not exceed the communication capacity of the RNC 100. The S-GW 4 transmits the data received from the transmission source server 3, to the xGSN 5. The xGSN 5 then transmits the data received from the S-GW 4 to the RNC 100. The RNC 100 then transmits the data received from the xGSN 5, to the UE 2 via the BTS 7. The UE 2 receives the data output by the transmission source server 3, from the BTS 7.

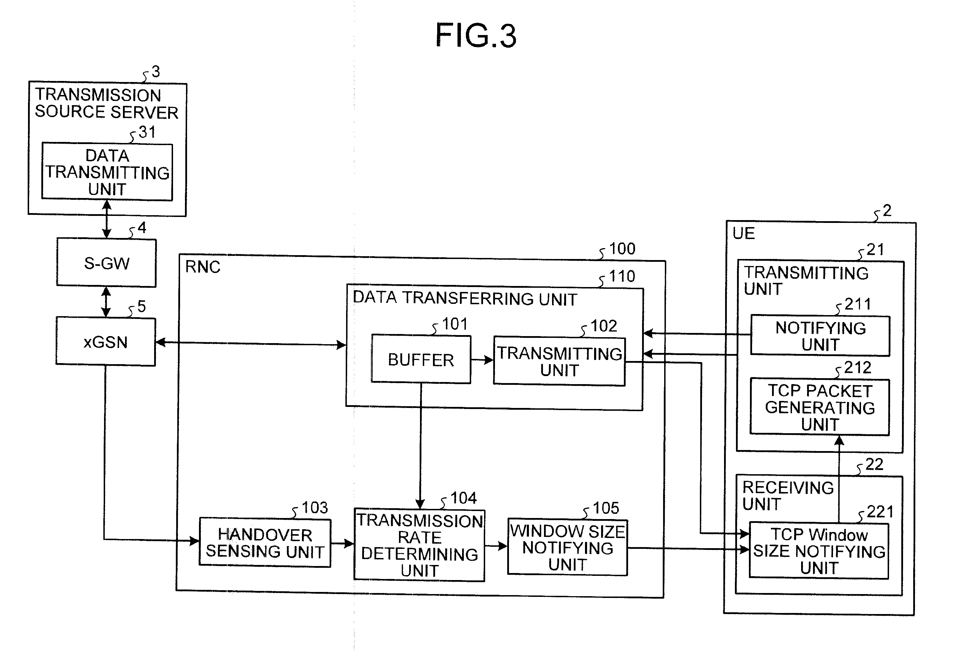

Next, a notification of a window size made by the RNC 100 when a handover occurs, and the operations of the UE 2 and the transmission source server 3 after the notification are described in detail. FIG. 3 is a block diagram of the wireless network control system according to the second embodiment. In reality, the BTS 7 exists between the RNC 100 and the UE 2, as illustrated in FIG. 2. For ease of explanation, however, the BTS 7 is not illustrated in FIG. 3. In the following description, the transmission and reception of data between the RNC 100 and the UE 2 are performed via the BTS 7.

A data transmitting unit 31 receives a window size notification from the UE 2 via the S-GW 4. Specifically, the data transmitting unit 31 receives a TCP packet containing the window size designated by the RNC 100 in its header, and obtains the window size from the TCP packet. The data transmitting unit 31 then changes the transmission rate by setting the window size for transmitting data to the RNC 100 at the window size designated by the RNC 100. The data transmitting unit 31 then transmits data to the S-GW 4 at the determined transmission rate.

The S-GW 4 transmits the data received from the transmission source server 3 to the xGSN 5. When a handover from the LTE system to the 3G system occurs in the UE 2, the S-GW 4 transmits the information about the occurrence of the handover from the LTE system to the 3G system, to the xGSN 5.

The xGSN 5 transmits the data received from the S-GW 4 to the RNC 100. In the second embodiment, the xGSN 5 is connected not only to the RNC 100 but also to other RNCs. In a case where a handover from the communication region of another RNC to the communication region of the RNC 100 occurs in the UE 2, the xGSN 5 transmits a request for execution of the handover to the RNC 100. When receiving information from the S-GW 4 about a handover from the LTE system to the 3G system, the xGSN 5 transmits a request for execution of the handover from the LTE system to the 3G system, to the RNC 100.

The RNC 100 according to the second embodiment includes a data transferring unit 110, a handover sensing unit 103, a transmission rate determining unit 104, and a window size notifying unit 105, as illustrated in FIG. 3. The data transferring unit 110 includes a buffer 101 and a transmitting unit 102.

The data transferring unit 110 receives data from the xGSN 5. The data transferring unit 110 then transmits the data to the UE 2, using the later described transmitting unit 102. The data transferring unit 110 also receives data from the UE 2. The data transferring unit 110 then transmits the data to the xGSN 5. The data transferring unit 110 also receives a window size notification from a notifying unit 211.

The buffer 101 is a storage device such as a memory. The buffer 101 has a predetermined capacity as the storage capacity for storing data. The storage capacity is determined by the memory size or the like. The buffer 101 stores data received from the xGSN 5. The buffer 101 accumulates data by sequentially storing the data transmitted from the xGSN 5. Read by the later described transmitting unit 102, the data accumulated in the buffer 101 decreases. What is obtained by subtracting the amount of accumulated data from the storage capacity of the buffer 101 is the free space in the buffer 101. That is, the larger the amount of accumulated data, the smaller the free space in the buffer 101. The smaller the amount of accumulated data, the larger the free space in the buffer 101.

The transmitting unit 102 reads data from the buffer 101. The transmitting unit 102 also determines the transmission rate, using the state of the line between the RNC 100 and the UE 2, and the free space in the buffer 101. For example, the transmitting unit 102 determines the transmission rate by raising the transmission rate when the free space in the buffer 101 is small, and lowering the transmission rate when the free space in the buffer 101 is large. The transmitting unit 102 then transmits the data read from the buffer 101 to the UE 2. At this point, the transmitting unit 102 performs transmission at the self-determined transmission rate.

The handover sensing unit 103 receives a request for execution of a handover from the xGSN 5. The handover sensing unit 103 then determines whether the handover execution request received from the xGSN 5 is a request for execution of a handover from the LTE system to the 3G system. If the requested handover is a handover from the LTE system to the 3G system, the handover sensing unit 103 senses the occurrence of a handover from the LTE system to the 3G system. The handover sensing unit 103 then outputs the information about the occurrence of the handover from the LTE system to the 3G system, to the transmission rate determining unit 104.

The transmission rate determining unit 104 includes a storage medium such as a memory or a hard disk. The transmission rate determining unit 104 stores the correspondence relationships between free spaces in the buffer 101 and transmission rates. In the second embodiment, the transmission rate determining unit 104 stores a table on which the following correspondence relationships are written. For example, in a case where the free space in the buffer 101 is less than 20% of the entire capacity, the transmission rate is such a rate that the window size is set at 10. The transmission rate that sets the window size at 10 is much lower than the maximum transmission rate in the 3G system. In a case where the free space in the buffer 10 is 20% or more of the entire capacity but is less than 80% of the entire capacity, the transmission rate sets the window size at 50. The transmission rate that sets the window size at 50 is a transmission rate that is about half the maximum transmission rate in the 3G system. In a case where the free space in the buffer 101 is 80% or more of the entire capacity, the transmission rate sets the window size at 100. The transmission rate that sets the window size at 100 is close to the maximum transmission rate in the 3G system.

In the second embodiment, to facilitate the determination of the transmission rate, the transmission rate determining unit 104 stores a table that associates the proportions of free spaces in the buffer 101 with transmission rates, as the correspondence relationships between the buffer 101 and the transmission rate. However, correspondence relationships between the buffer 101 and the transmission rate are not particularly limited, as long as the transmission rate can be determined from the free space in the buffer 101. For example, correspondence relationships between the buffer 101 and the transmission rate may be represented by a calculation formula that makes the transmission rate proportionate to the free space in the buffer 101.

Receiving the information about the occurrence of a handover from the LTE system to the 3G system, the transmission rate determining unit 104 obtains the current free space in the buffer 101, from the buffer 101. The transmission rate determining unit 104 may obtain the amount of data currently accumulated in the buffer 101, and determine the current free space in the buffer 101 by subtracting the amount of currently accumulated data from the storage capacity of the buffer 101.

The transmission rate determining unit 104 then obtains the transmission rate corresponding to the current free space in the buffer 101, from the table of the correspondence relationships between free spaces in the buffer 101 and transmission rates stored therein. The transmission rate determining unit 104 determines the transmission rate corresponding to the current free space in the buffer 101 to be the transmission rate for the transmission source server 3 to transmit data. For example, in a case where the current free space in the buffer 101 is 10%, the transmission rate determining unit 104 obtains the transmission rate that sets the window size at 10 from the correspondence relationship table. The transmission rate determining unit 104 then determines the transmission rate that sets the window size at 10 to be the transmission rate for the transmission source server 3 to transmit data. Hereinafter, the transmission rate that the transmission rate determining unit 104 determines to be the transmission rate for the transmission source server 3 to transmit data will also be referred to as the "source transmission rate".

The transmission rate determining unit 104 outputs the source transmission rate to the window size notifying unit 105. Here, window sizes and transmission rates are in one-to-one correspondence. Therefore, the transmission rate determining unit 104 may output a window size as the source transmission rate to the window size notifying unit 105.

The window size notifying unit 105 receives an input of the source transmission rate from the transmission rate determining unit 104. The window size notifying unit 105 then determines the window size in accordance with the source transmission rate. For example, the window size notifying unit 105 receives a transmission rate that sets the window size at 10 as the source transmission rate from the transmission rate determining unit 104. In this case, the window size notifying unit 105 obtains "10" as the window size corresponding to the source transmission rate. Here, the window size notifying unit 105 may determine the window size by some other method. For example, a storage medium is provided in the window size notifying unit 105, and a calculation formula for determining the window size from a transmission rate is stored in the window size notifying unit 105. The window size notifying unit 105 then determines the window size in accordance with the source transmission rate by assigning the source transmission rate to the stored calculation formula.

The window size notifying unit 105 notifies a TCP Window size notifying unit 221 of the UE 2 of the window size in accordance with the source transmission rate. An example of a window size notification from the window size notifying unit 105 to the TCP Window size notifying unit 221 is now described.

First, the window size notifying unit 105 has a storage medium such as a memory. The window size notifying unit 105 stores beforehand a format of the TCP packet for sending a window size notification. In the following, the TCP packet for sending a window size notification will be also referred to as the "TCP Window size packet". The window size notifying unit 105 generates a TCP window size packet containing the window size in accordance with the source transmission rate, with the use of the stored format of the TCP window size packet.

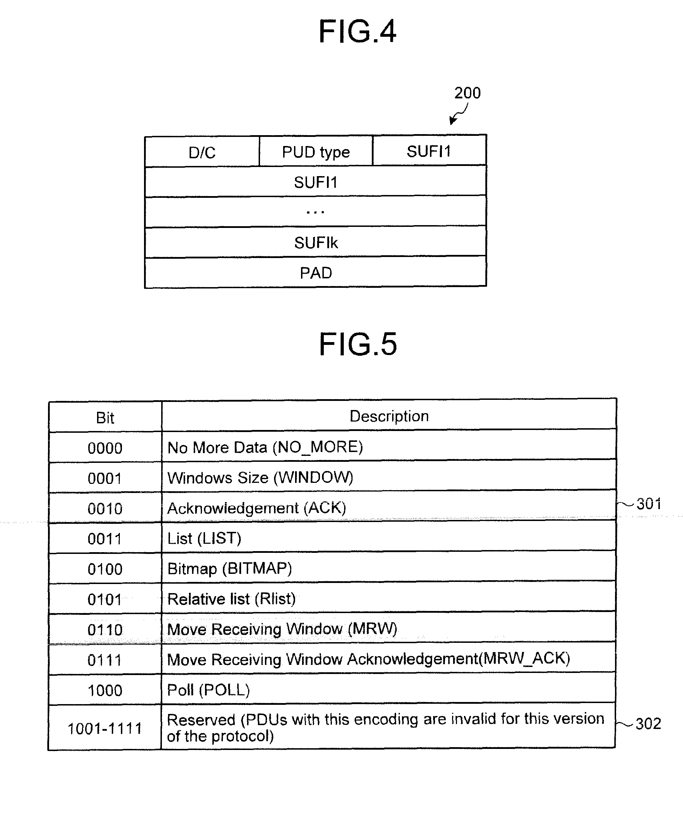

An example of the TCP window size packet generated by the window size notifying unit 105 is now described. An example case where the window size notifying unit 105 generates a STATUS PDU (Protocol Data Unit) as the TCP window size packet is described herein. A STATUS PDU is the data that is used for transmitting and receiving protocol information such as a delivery confirmation and a window size in TCP/IP. Also, a STATUS PDU is one of RLC (Radio Link Control) packets for controlling a wireless link between the RNC 100 and the UE 2. FIG. 4 is a diagram illustrating an example of a STATUS PDU format. As illustrated in FIG. 4, a format 200 has D/C and PDU Type as the information that indicates the type of the PDU. The format 200 also has a parameter represented by SUFIs (Super-Fields) 1 through k (k being a natural number of 1 or higher). The SUFIs are data that can be represented by integral multiples of 4. FIG. 5 is a diagram illustrating the specifics of the data stored in the SUFIs. For example, Acknowledgement (ACK) 301 illustrated in FIG. 5 is the data about the delivery confirmation. The respective data illustrated in FIG. 5 are stored in the respective SUFIs 1 through k. More SUFIs are added as the amount of stored data increases. For example, in a case where only the data of the ACK 301 of FIG. 5 is stored, only the SUFI 1 is used. In a case where data such as Reserved 302 is stored as well as the ACK 301, SUFIs such as the SUFI 2 and SUFI 3 are sequentially added as the amount of stored data becomes larger.

The window size notifying unit 105 stores the STATUS PDU format 200 illustrated in FIG. 4. The window size notifying unit 105 generates a STATUS PDU having a header that contains the window size in accordance with the source transmission rate, using the STATUS PDU format 200. Specifically, the window size notifying unit 105 indicates TCP WINDOW with the first four bits of Reserved 302 of FIG. 5, has the subsequent sixteen bits to cause a SUFI to store the information indicating the window size in accordance with the source transmission rate, and generates a STATUS PDU containing the SUFI. The window size notifying unit 105 then transmits the generated STATUS PDU to the transmission source server 3, to send a notification of the window size in accordance with the source transmission rate.

The UE 2 includes a transmitting unit 21 and a receiving unit 22. The transmitting unit 21 includes the notifying unit 211 and a TCP packet generating unit 212. The receiving unit 22 includes the TCP Window size notifying unit 221.

The receiving unit 22 receives data output from the transmission source server 3 and other mobile terminals, from the data transferring unit 110. The data received by the receiving unit 22 includes a RLC packet and the like.

The TCP Window size notifying unit 221 receives a notification of the window size in accordance with the source transmission rate, from the window size notifying unit 105. In the second embodiment, when the receiving unit 22 receives a RLC packet, the TCP Window size notifying unit 221 determines whether the RLC packet is a TCP window size packet. If the RLC packet is a TCP window size packet, the TCP Window size notifying unit 221 obtains the window size from the TCP window size packet. In this manner, the TCP Window size notifying unit 221 receives a notification of the window size in accordance with the source transmission rate from the window size notifying unit 105 in this embodiment. The TCP Window size notifying unit 221 then outputs the window size in accordance with the source transmission rate to the TCP packet generating unit 212 of the notifying unit 211.

The transmitting unit 21 transmits the data for the transmission source server 3 and other mobile terminals, to the data transferring unit 110 of the RNC 100.

The TCP packet generating unit 212 receives an input of the window size in accordance with the source transmission rate, from the TCP Window size notifying unit 221. The TCP packet generating unit 212 then generates a TCP packet having a header that contains the window size in accordance with the source transmission rate.

The notifying unit 211 transmits the TCP packet that is generated by the TCP packet generating unit 212 and has a header containing the window size in accordance with the source transmission rate, to the data transferring unit 110 of the RNC 100. The TCP packet transmitted from the notifying unit 211 is transmitted to the transmission source server 3 via the RNC 100, the xGSN 5, and the S-GW 4. With this arrangement, the notifying unit 211 can notify the transmission source server 3 of the window size in accordance with the source transmission rate.

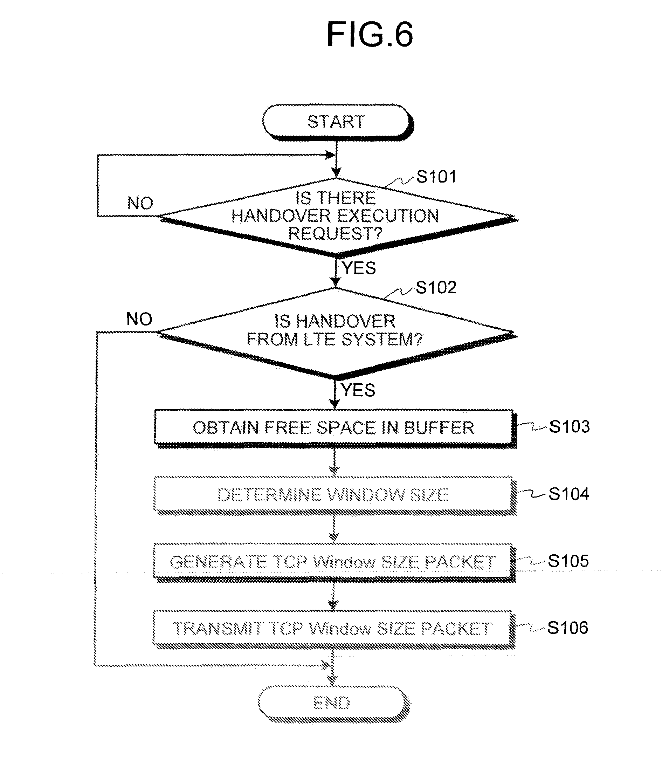

Referring now to FIG. 6, the flow in an operation to be performed by the RNC 100 to send a notification of the transmission rate of the transmission source server 3 when a handover occurs is described.

FIG. 6 is a flowchart illustrating an operation to be performed by the RNC 100 to send a notification of the transmission rate of the transmission source server 3 when a handover occurs.

The handover sensing unit 103 stands by until a handover execution request is received from the xGSN 5 ("No" in step S101).

When there is a handover execution request from the xGSN 5 ("Yes" in step S101), the handover sensing unit 103 determines whether the handover reported from the xGSN 5 is a handover from the LTE system (step S 102).

If the handover reported from the xGSN 5 is a handover within the 3G system ("No" in step S102), the RNC 100 ends the operation to set the transmission rate of the transmission source server 3.

If the handover reported from the xGSN 5 is a handover from the LTE system ("Yes" in step S102), the transmission rate determining unit 104 obtains the current free space in the buffer 101, from the buffer 101 (step S103).

From the correspondence relationships between the buffer 101 and transmission rates, the transmission rate determining unit 104 determines the transmission rate of the transmission source server 3 (the source transmission rate) in accordance with the current free space of the buffer 101 (step S 104).

Receiving an input of the source transmission rate determined by the transmission rate determining unit 104, the window size notifying unit 105 generates a TCP window size packet containing the information about the window size in accordance with the source transmission rate (step S 105).

The window size notifying unit 105 then transmits the TCP window size packet containing the information about the window size in accordance with the source transmission rate, to the TCP Window size notifying unit 221 of the UE 2 (step S106).

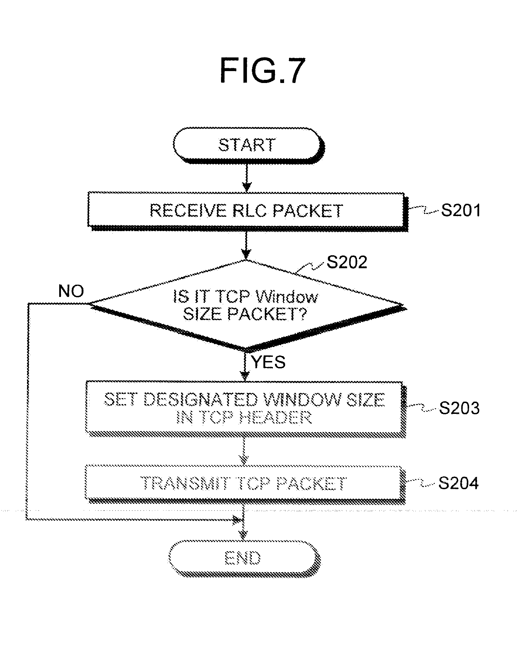

Referring now to FIG. 7, the flow in an operation to be performed by the UE 2 to send a notification of the transmission rate of the transmission source server 3 when a handover occurs is described. FIG. 7 is a flowchart illustrating an operation to be performed by the UE 2 to send a notification of the transmission rate of the transmission source server 3 when a handover occurs.

The receiving unit 22 receives a RLC packet from the transmitting unit 102 or the window size notifying unit 105 (step S201).

The TCP Window size notifying unit 221 determines whether the RLC packet received by the receiving unit 22 is a TCP window size packet (step S202). If the RLC packet received by the receiving unit 22 is not a TCP window size packet ("No" in step S202), the UE 2 ends an operation to send a notification of the transmission rate of the transmission source server 3.

If the RLC packet received by the receiving unit 22 is a TCP window size packet ("Yes" in step S202), the TCP Window size notifying unit 221 obtains the window size in accordance with the source transmission rate, from the TCP window size packet. The TCP Window size notifying unit 221 then transmits the window size in accordance with the source transmission rate, to the TCP packet generating unit 212.

The TCP packet generating unit 212 sets the window size designated as the window size in accordance with the source transmission rate by the RNC 100, in the TCP header (step S203), to generate a TCP packet.

The notifying unit 211 transmits the TCP packet that is generated by the TCP packet generating unit 212 and has the header containing the window size in accordance with the source transmission rate, to the transmission source server 3 (step S204).

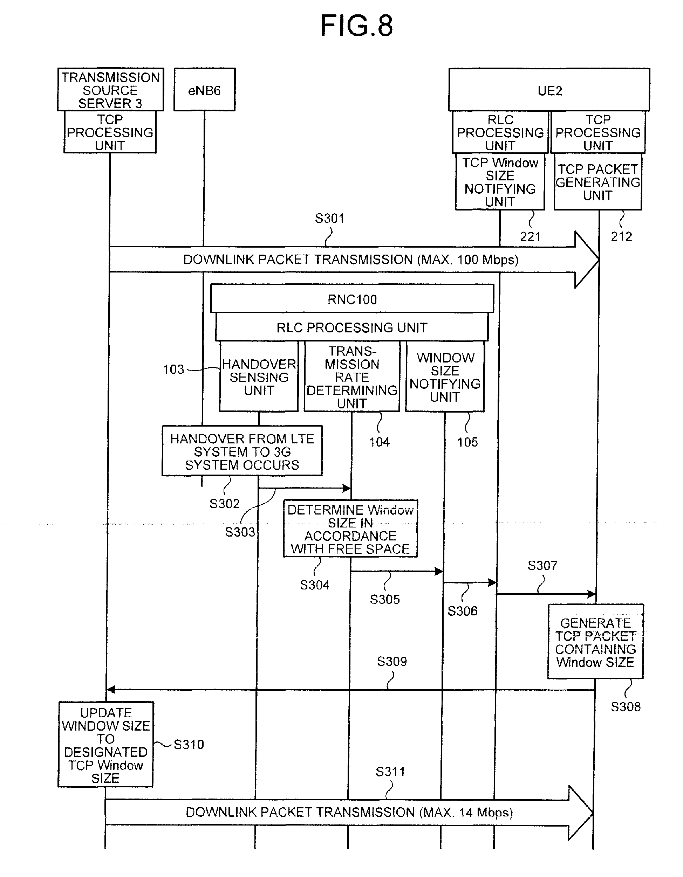

Referring now to FIG. 8, the flow in the operations of the respective components when a handover from the LTE system to the 3G system occurs is described. FIG. 8 is a sequence diagram illustrating the operations to be performed by the respective components when the handover occurs. Each of the ordinate axes in FIG. 8 indicates the course of time in the downward direction. Each of the ordinate axes indicates the operation of each corresponding one of the components illustrated at the tops of the respective ordinate axes.

First, when the UE 2 exists in the communication range of the LTE system, data is transmitted from the transmission source server 3 to the UE 2 at a maximum transmission rate of 100 Mbps (step S301).

A handover from the LTE system to the 3G system then occurs (step S302). Specifically, the base station of the UE 2 is changed from the eNB 6 to the RNC 100.

When sensing the occurrence of the handover from the LTE system to the 3G system, the handover sensing unit 103 transmits the information about the handover occurrence to the transmission rate determining unit 104 (step S303).

The transmission rate determining unit 104 determines the source transmission rate in accordance with the free space in the buffer 101 (step S304). The transmission rate determining unit 104 outputs the determined source transmission rate to the window size notifying unit 105 (step S305).

The window size notifying unit 105 determines the window size in accordance with the source transmission rate, and transmits a TCP window size packet containing the window size to the UE 2 (step S306).

If a RLC packet received from the RNC 100 is the TCP window size packet, the TCP Window size notifying unit 221 obtains the window size from the TCP window size packet, and outputs the window size to the TCP packet generating unit 212 (step S307).

The TCP packet generating unit 212 generates a TCP packet having a header containing the window size designated by the RNC 100 (step S308).

The notifying unit 211 then transmits the TCP packet generated by the TCP packet generating unit 212 to the transmission source server 3 via the RNC 100 (step S309).

The transmission source server 3 obtains the window size from the TCP packet received from the notifying unit 21 1, and changes the transmission rate by setting the obtained window size as the window size for transmitting data to the RNC 100 (step 5310).

After that, data is transmitted from the transmission source server 3 to the UE 2 at a maximum transmission rate of 14 Mbps (step S311).

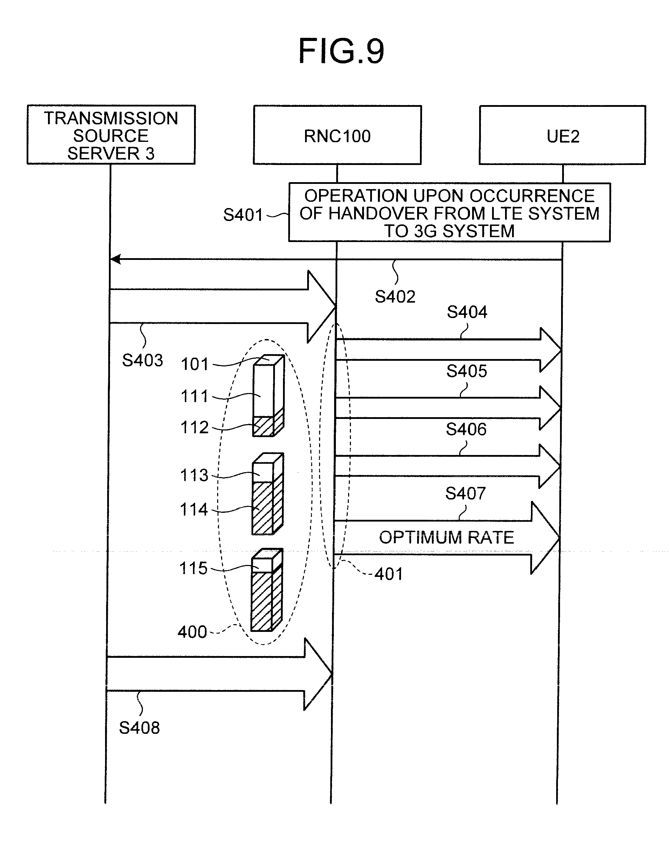

Referring now to FIG. 9, a change in the transmission rate for data transmission from the RNC I00 to the UE 2 after a handover from the LTE system to the 3G system occurs is described. FIG. 9 is a sequence diagram for explaining the change in the transmission rate for data transmission from the RNC 100 to the UE 2. It should be noted that the rectangular parallelepipeds illustrated in FIG. 9 represent the buffer 101 of the RNC 100. The upper one of the two divided portions of each buffer 101 indicates the free space in the buffer 101, and the lower one of the two divided portions of each buffer 101 indicates the amount of data accumulated in the buffer 101.

First, a handover from the LTE system to the 3G system occurs. The RNC 100 then determines the source transmission rate in accordance with the free space in the buffer 101, and notifies the UE 2 of the window size in accordance with the source transmission rate (step S401). Here, the buffer 101 of the RNC 100 at the time of the handover is in the state illustrated in FIG. 9. That is, accumulated data 112 that is a small amount compared with the storage capacity of the buffer 101 is accumulated. In this case, a free space 111 of the buffer 101 is the larger of the two. Therefore, the RNC 100 determines the source transmission rate to be a high transmission rate among the transmission rates for the 3G system.

The UE 2 notifies the transmission source server 3 of the window size designated by the RNC 100 (step S402).

The transmission source server 3 determines the transmission rate in accordance with the window size reported from the UE 2, and transmits data to the RNC 100 at the transmission rate (step S403). Since the source transmission rate has been determined to be a high transmission rate in step S301, the transmission source server 3 transmits a large amount of data to the RNC 100 per unit time.

When the free space in the buffer 101 is large as indicated by the free space 111, the RNC 100 transmits data to the UE 2 at a low transmission rate (step S404).

Since the RNC 100 receives data from the transmission source server 3 at a high transmission rate here, data is accumulated in the buffer 101 in a short period of time as indicated by accumulated data 114. In this case, the free space in the buffer 101 becomes smaller as indicated by a free space 113. As the free space becomes smaller as indicated by the free space 113, the RNC 100 raises the transmission rate for transmitting data to the UE 2 (step S405).

The free space in the buffer 101 becomes even smaller as indicated by a free space 115. Accordingly, the RNC 100 raises the transmission rate for transmitting data to the UE 2 (step S406).

By repeatedly raising the transmission rate for transmitting data to the UE 2, the RNC 100 can establish a transmission rate for transmitting data to the UE 2 in a manner balanced with data reception from the transmission source server 3 in a short period of time (step S407). The balanced transmission rate is illustrated as the "optimum rate" in FIG. 9.

As described above, if the free space in the buffer 101 is large when a handover from the LTE system to the 3G system in the second embodiment, the transmission rate for transmitting data from the transmission source server 3 is high. Therefore, as indicated by the portion surrounded by a dotted line 400 in FIG. 9, data is accumulated in the buffer 101 and the free space becomes smaller in a short period of time. Accordingly, the transmission rate for transmission from the RNC 100 to the UE 2 becomes higher in a short period of time, as indicated by the portion surrounded by a dotted line 401. In this manner, the RNC 100 can establish a transmission rate for transmitting data to the UE 2 in a manner balanced with data reception from the transmission source server 3 in a short period of time.

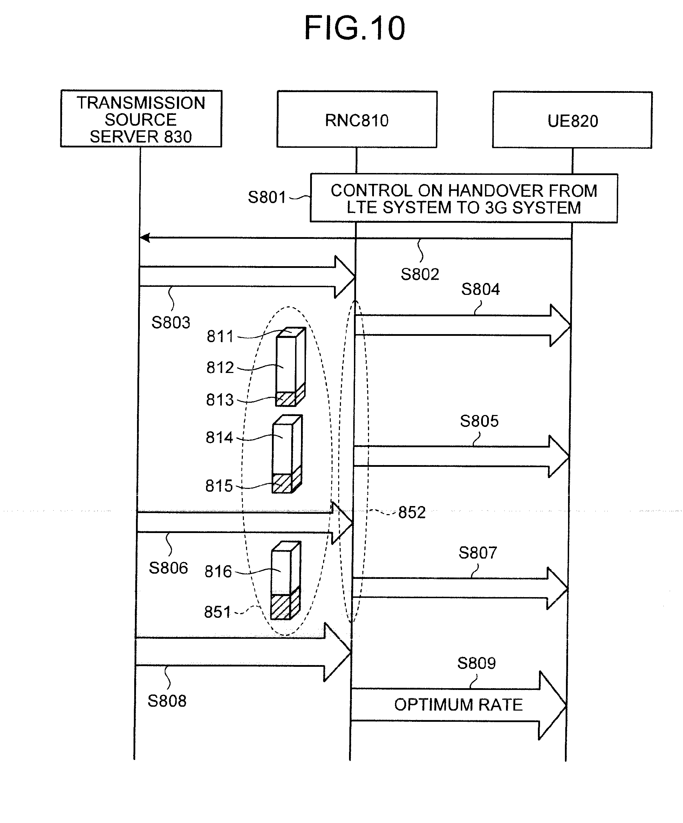

Referring now to FIG. 10, a case where a transmission rate in accordance with the free space in the buffer 101 is not set, and the transmission rate is simply lowered to a predetermined value upon occurrence of a handover while the transmission for transmission from the transmission source server 3 is determined in a conventional manner is described. FIG. 10 is a sequence diagram for explaining a change in the transmission rate in the case where a transmission rate in accordance with the free space in the buffer is not determined, and the transmission rate is lowered to the predetermined value upon occurrence of a handover. Each of the ordinate axes in FIG. 10 indicates the course of time in the downward direction. Each of the ordinate axes chronologically indicates the operation of each corresponding one of the components of a RNC 810, a UE 820, and a transmission source server 830 illustrated at the tops of the respective ordinate axes. The arrows between each two ordinate axes represent the flow of data between the components, and the thicknesses of the respective arrows represent transmission rates.

First, when a handover occurs, the RNC 810 performs handover control on the UE 820. That is, the RNC 810 notifies the UE 820 of a window size in accordance with a predetermined transmission rate so that the transmission rate for data transmission of the transmission source server 830 is set at the predetermined transmission rate (step S801). Here, the predetermined transmission rate is a sufficiently lower transmission rate than the maximum value of the transmission rate for data transmission between the RNC 810 and the transmission source server 830. In the following description, the "maximum transmission rate" indicates the maximum value of the transmission rate for data transmission from the transmission source server 830 to the RNC 810.

The UE 820 notifies the transmission source server 830 of the window size in accordance with the predetermined transmission rate (step S802).

The transmission source server 830 transmits data to the RNC 810 at the predetermined transmission rate in accordance with the designated window size (step S803). In the following description, when the RNC 810 receives data from the transmission source server 830, the free space 812 in a buffer 811 of the RNC 810 is large, as illustrated in FIG. 10. In this case, the amount of accumulated data 813 in the buffer 81 1 is small.

The RNC 810 transmits data to the UE 820 at the predetermined transmission rate, and maintains the transmission rate for data exchanges with the UE 820, since the free space 812 is large (step S804). Since the transmission rate for data transmission from the transmission source server 830 is low, the free space in the buffer 811 remains large. Therefore, the RNC 810 transmits data to the UE 820 at a lower transmission rate than the maximum transmission rate (step S805).

As the amount of accumulated data increases as indicated by accumulated data 815, and the free space in the buffer 811 becomes smaller as indicated by a free space 814, the RNC 810 raises the transmission rate for data transmission to the UE 820. The UE 820 determines the window size in accordance with the state of reception from the RNC 810, and transmits the window size to the transmission source server 830 via the RNC 810. The transmission source server 830 then transmits data to the RNC 810 at the transmission rate in accordance with the window size received from the UE 820 (step S806).

When the free space becomes smaller as indicated by a free space 816, the RNC 810 transmits data to the UE 820 at a higher transmission rate (step S807). The RNC 810 also raises the transmission rate for transmission from the transmission source server 830. With this arrangement, the transmission source server 830 transmits data to the RNC 810 at the raised transmission rate (step S808).

After repeating the above procedures, the RNC 810 lastly transmits data to the UE 820 at a transmission rate (the optimum rate) balanced with the amount of data received from the transmission source server 830 (step S809).

Where the transmission rate is gradually raised from a low rate as described above, if the transmission rate for transmission from the transmission source server 830 is determined without the free space in the buffer 811 being taken into consideration, the transmission rate for transmission from the RNC 810 to the UE 820 is restrained to a lower rate while the free space in the buffer 811 is large. Therefore, as indicated by the portion surrounded by a dotted line 851 in FIG. 10, it takes time to store sufficient data in the buffer 811. As a result, it also takes time to raise the transmission rate for data transmission between the RNC 810 and the UE 820 to the transmission rate (the optimum rate) balanced with the amount of data received from the transmission source server 830, as indicated by the portion surrounded by a dotted line 852.

Therefore, where the transmission rate is lowered upon occurrence of a handover, it is preferable to determine the transmission rate for transmission from the transmission source server 3 by taking into consideration the free space in the buffer 101, as in the second embodiment. With this arrangement, the RNC 100 can adjust, in a short period of time, the transmission rate for transmission to the UE 2, to the transmission rate balanced with the amount of data received from the transmission source server 3.

Referring now to FIG. 11, changes in the throughput between the transmission source server 3 and the UE 2 in the second embodiment are compared with changes in the throughput between the transmission source server 3 and the UE 2 in a case where a conventional technique is employed. FIG. 11 illustrates graphs for comparing changes in the throughput between the transmission source server and the UE in the second embodiment with changes in the throughput between the transmission server and the UE in a conventional case. In the graphs of FIG. 11, the abscissa axis indicates the course of time, and the ordinate axis indicates the value of the throughput between the transmission source server 3 and the UE 2.

A graph 500 represented by the solid line in FIG. 11 is the graph illustrating the changes in the throughput between the transmission source server 3 and the UE 2 in the second embodiment. A graph 501 represented by the dotted line in FIG. 11 is the graph illustrating the changes in the throughput between the transmission source server 3 and the UE 2 according to a conventional method. A dot-and-dash line 502 indicates the timing of occurrence of a handover from the LTE system to the 3G system. In the following description, the free space in each buffer is large at the time of the occurrence of the handover illustrated in FIG. 11.

At the time represented by a dot 503, the transmission rate for transmission from the transmission source is changed. According to the conventional method, the transmission rate between the RNC 100 and the UE 2 is not easily raised when the free space in the buffer is large. Therefore, the throughput between the transmission source server 3 and the UE 2, including the RNC 100 and the UE 2, only gradually becomes higher as indicated by the graph 501. According to the method of the second embodiment, on the other hand, a large amount of data can be accumulated in the buffer in a short period of time, and accordingly, the throughput between the RNC 100 and the UE 2 can be increased in a short period of time. Thus, in the wireless network control system according to the second embodiment, the transmission rate between the transmission source server 3 and the UE 2 can be raised in a shorter period of time than in the conventional case, as indicated by a dot 504.

Referring now to FIG. 12, the amount of packets with respect to the communication band after the occurrence of a handover from the LTE system to the 3G system in the second embodiment is compared with the amount of packet in a case where a conventional technique is employed. FIG. 12 is a diagram for explaining the difference in the amount of packets with respect to the communication band caused by the occurrence of the handover between the second embodiment and the conventional case. The upper half of FIG. 12 shows the packet amount with respect to the communication band after the occurrence of the handover from the LTE system to the 3G system in the case where the conventional technique is employed. The lower half of FIG. 12 shows the amount of packets with respect to the communication band after the occurrence of the handover from the LTE system to the 3G system in the case where the method according to the second embodiment is employed. A band 601 and a band 603 represent the communication bands in the 3G system. User A, User B, and User C represent the amounts of packets received by the UEs 2 of the respective users.

In both of the case of the conventional method and the case of the method according to the second embodiment, User A and User B have already used the communication band by the amounts illustrated in FIG. 12 at the time of the occurrence of the handover. The handover from the LTE system to the 3G system occurs in the UE 2 of User C.

Since the transmission rate is not changed upon occurrence of a handover by the conventional technique, the UE 2 of User C receives more packets than it can process from the transmission source server 3. Therefore, the RNC 100 receives packets beyond the band 601, as indicated by a packet amount 602. As a result, the UEs 2 of User A and User B might be adversely affected, as there might be missing packets and the like.

In the wireless network control system according to the second embodiment, on the other hand, the transmission rate is changed upon occurrence of a handover, and therefore, the UE 2 of User C receives packets in accordance with its processing capacity. Accordingly, the RNC 100 receives packets that fall within the range of the band 603 at a maximum, as indicated by a packet amount 604. In this manner, the adverse influence on the UEs 2 of User A and User B can be alleviated.

Next, the advantageous effects of the change in the transmission rate made upon occurrence of a handover as a function of the second embodiment are described in detail. Referring now to FIG. 13, the change in the transmission rate between the transmission source server and a UE caused in a case where the transmission rate is lowered upon occurrence of a handover from the LTE system to the 3G system is compared with the change caused in the transmission rate of the transmission source server after the occurrence of a congested state. FIG. 13 shows graphs for comparing a case where the transmission rate is lowered upon occurrence of a handover with a case where the transmission rate is lowered after a congested state occurs. In the graphs of FIG. 13, the abscissa axis indicates the course of time, and the ordinate axis indicates the value of the transmission rate between the RNC 100 and each UE 2. In FIG. 13, however, the function of the second embodiment to lower the transmission rate of the transmission source by determining the window size in accordance with the free space in the buffer is not taken into consideration, so as to illustrate the effect to lower the transmission rate upon occurrence of a handover. The handover described in the following is a handover from the LTE system to the 3G system.

The graph represented by the dotted line is the graph that shows the change in the transmission rate between the RNC and a UE after the occurrence of a handover in the case where the transmission rate of the transmission source server is changed after a congested state occurs. The graph represented by the solid line is the graph that shows the change in the transmission rate between the RNC and a UE after the occurrence of a handover in the case where the transmission rate is lowered upon occurrence of the handover from the LTE system to the 3G system.

In the case where the transmission rate is lowered upon occurrence of a handover, the RNC 100 lowers the transmission rate of the transmission source server 3 to a transmission rate 700 when the handover occurs. The RNC 100 then maintains the transmission rate for a predetermined period of time, so as to raise the transmission rate in accordance with the free space in the buffer 101. Therefore, the transmission rate between the transmission source server 3 and the UE 2 does not become higher in a period 701. The RNC 100 then raises the transmission rate for transmission from the RNC 100 to the UE 2 in a short period of time, to a transmission rate balanced with the amount of data received from the transmission source server 3. In FIG. 13, this transmission rate is illustrated as the "optimum rate". In this manner, the transmission rate between the transmission source server 3 and the UE 2 becomes higher. Since the transmission rate between the transmission source server 3 and the UE 2 can be raised in a short period of time, the transmission of packets to the UE 2 can be completed at time 702.

In the case where the transmission rate of the transmission source server is changed after a congested state occurs, the transmission rate of the transmission source is not changed when a handover occurs. Therefore, the amount of packets transmitted to the RNC exceeds the communication capacity of the RNC in a period 703, and as a result, packet discarding occurs. Therefore, a resending operation is performed between the transmission source server and the UE. At time 704, the transmission source server recognizes the congested state, and rapidly lowers the transmission rate. Meanwhile, the RNC raises the transmission rate in accordance with the free space in the buffer, and therefore, maintains the transmission rate for a predetermined period of time. As a result, the transmission rate between the transmission source server and the UE does not become higher in a period 705. After that, the transmission rate between the transmission source server and the UE gradually recovers. Since the resending operation is performed and the transmission rate rapidly drops as described above, the completion of the packet transmission is delayed, and the packet transmission is completed at time 706.

As can be seen from the comparison between the case where transmission rate is lowered upon occurrence of a handover and the case where the transmission rate is lowered when a congested state occurs, the time required to complete packet transmission in the case where the transmission rate is lowered upon occurrence of a handover can be made shorter than that in the other case by the period of time equivalent to time 707 illustrated in FIG. 13.

As described above, the RNC according to the second embodiment sets the transmission rate in accordance with the free space in the buffer to be the transmission rate for data transmission from the transmission source server when a handover from the LTE system to the 3G system with a smaller maximum transmission rate occurs. With this arrangement, data transmission beyond the processing capacity of the wireless network control device due to a handover can be restrained, and the delay in completion of data transmission in the wireless network control device due to data discarding or the like can be shortened.

Since the transmission rate for transmission from the transmission source server is determined in accordance with the free space in the buffer, data can be accumulated in the buffer in a short period of time, and the free space in the buffer can be reduced in a short period of time. Accordingly, the RNC according to the second embodiment can establish data transmission to a UE at a transmission rate balanced with the reception of data from the transmission source server in a short period of time after a handover. The decrease in data throughput between the transmission source server and the UE can also be reduced.

Further, the RNC according to the second embodiment lowers the transmission rate upon occurrence of a handover. Accordingly, the RNC can avoid reception of packets beyond the communication capacity of the RNC when the handover occurs. Accordingly, a resending operation and a rapid decrease in the transmission rate can be avoided, and a delay in completion of packet transmission can also be avoided.

Also, in the second embodiment described above, the transmission rate of the transmission source server is determined when the handover sensing unit 103 senses a handover, since an overflow often occurs particularly in the case of a handover to a communication system with a smaller maximum transmission rate. However, the transmission rate of the transmission source may be determined some other time, as long as an overflow can be avoided when a handover to a communication system with a smaller maximum transmission rate occurs. For example, the wireless network control device may determine a transmission rate in accordance with the free space in its own buffer while data is being transmitted from the transmission source server, and may send a notification of a window size in accordance with the transmission rate. In this manner, whenever a handover to a communication system with a smaller maximum transmission rate occurs, an overflow due to the handover can be avoided. In this case, the handover sensing unit may not be provided in the wireless network control device.

According to one embodiment of the wireless network control device, the wireless network control method, and the wireless network control system disclosed in the present invention, data transmission from a transmission source device can be established at a transmission rate in accordance with the free space in its own buffer. Accordingly, by the technique disclosed in the present invention, data transmission beyond the processing capacity of its own device can be restrained, and the delay in completion of data transmission due to data discarding or the like can be shortened. In this manner, decreases in the throughput between the data transmission source and each mobile terminal can be advantageously reduced.

## Claims

1. A wireless network control device (1,100) comprising:
a buffer (11,101) that has a predetermined storage capacity, and arranged to accumulate data received from an external device;
a transmitting unit (12,102) arranged to read data from the buffer (11,101) and transmit the data to a mobile terminal;
a transmission rate determining unit (13,104) arranged to determine a transmission rate for transmitting data from the external device to its own device, based on a free space in the buffer (11,101); and
a window size notifying unit (14,105) arranged to notify the mobile terminal of a window size in accordance with the transmission rate determined by the transmission rate determining unit (13,104).

2. The wireless network control device (100) according to claim 1, further comprising
a handover sensing unit (103) that is arranged to sense occurrence of a handover from a first communication system to a second communication system having a smaller maximum transmission rate for transmitting data from the external device to the mobile terminal than that of the first communication system,
wherein the transmission rate determining unit (104) is arranged to determine the transmission rate when the handover sensing unit (103) senses handover occurrence.

3. The wireless network control device (100) according to any one of claim 1 or 2, wherein the transmission rate determining unit (104) is arranged to store a correspondence relationship between the free space in the buffer (101) and the transmission rate, obtain a current free space in the buffer (101), and determine the transmission rate in accordance with the current free space to be the transmission rate for transmission from the external device to its own device, based on the correspondence relationship.

4. The wireless network control device (100) according to any one of claims 1 to 3, wherein, in the correspondence relationship, the transmission rate becomes lower in proportion to the free space in the buffer (101).

5. The wireless network control device (100) according to any one of claims 2 to 4, wherein the first communication system is a LTE system, and the second communication system is a 3G system.

6. The wireless network control device (100) according to any one of claims 1 to 5, wherein the window size notifying unit (104) is arranged to notify the mobile terminal of the window size using a control packet.

7. A wireless network control method comprising:
accumulating data received from an external device, in a buffer having a predetermined capacity;
transmitting the data accumulated in the buffer to a mobile terminal;
sensing occurrence of a handover from a first communication system to a second communication system having a smaller maximum transmission rate for transmitting data from the external device to the mobile terminal than that of the first communication system;
determining, upon receipt of a notification of the occurrence of the handover, the transmission rate for transmitting data from the external device to its own device, based on a free space in the buffer; and
notifying the mobile terminal of a window size in accordance with the transmission rate determined in the determining the transmission rate.

8. A wireless network control system comprising a wireless network control device (100), a mobile terminal (2), and a transmission source device (3),
the wireless network control device (100) including:
a buffer (101) that has a predetermined storage capacity and is arranged to accumulate data received from the transmission source device (3);
a transmitting unit (102) that is arranged to transmit the data accumulated in the buffer (101) to the mobile terminal;
a handover sensing unit (103) that is arranged to sense occurrence of a handover from a first communication system to a second communication system having a smaller maximum transmission rate for transmitting data from the external device (3) to the mobile terminal (2) than that of the first communication system;
a transmission rate determining unit (100) that is arranged, upon receipt of a notification of the occurrence of the handover from the handover sensing unit, to determine the transmission rate for transmitting data from the external device (3) to its own device, based on a free space in the buffer (101); and
a window size notifying unit (105) that is arranged to notify the mobile terminal (2) of a window size in accordance with the transmission rate determined by the transmission rate determining unit (104),
the mobile terminal (2) including
a notifying unit (211) that is arranged to receive the notification of the window size from the window size notifying unit (105), and to notify the transmission source device (3) of the window size,
the transmission source device (3) including
a data transmitting unit (31) that is arranged to transmit data to the wireless network control device (100) at a transmission rate based on the window size reported from the notifying unit (211).
